# FASCICULE DE BREVET EUROPEEN

(11) **EP 3 071 432 B1**
(45) Date de publication et mention de la délivrance du brevet: **13.12.2017**
(21) Numéro de dépôt: 14796803.6
(22) Date de dépôt: 30.09.2014
(51) Int. Cl.: B60D 1/48, B60D 1/56

(54) **STRUCTURE DE VEHICULE AVEC SUPPORT METALLIQUE POUR ANNEAU DE REMORQUAGE DE VEHICULE AUTOMOBILE ET VEHICULE EQUIPÉ D'UNE TELLE STRUCTURE**
FAHRZEUGSTRUKTUR MIT EINER METALLHALTERUNG FÜR EINE KRAFTFAHRZEUG-ZUGÖSE UND FAHRZEUG MIT SOLCH EINER STRUKTUR
VEHICLE STRUCTURE WITH METAL MOUNTING FOR MOTOR VEHICLE DRAWBAR EYE AND VEHICLE PROVIDED WITH SUCH A STRUCTURE

(30) Priorité: 22.11.2013 FR 1361495
(43) Date de publication de la demande: 28.09.2016
(73) Titulaire: Renault, 92100 Boulogne Billancourt (FR)
(72) Inventeur: HLUBINA, Thierry, F-92370 Chaville (FR); DELORD, Christian, F-78000 Versailles (FR)
(86) Numéro de dépôt international: PCT/FR2014/052481
(87) Numéro de publication internationale: WO 2015/075333

(56) Documents cités:
- WO-A1-2011/075031
- DE-A1-102007 024 882
- FR-A1- 2 909 948
- JP-A- H11 334 329
- US-A1- 2011 285 107

## Description

L'invention concerne un support métallique pour anneau de remorquage de véhicule automobile, ainsi qu'une structure de véhicule et un véhicule équipés d'un tel support.

Les véhicules automobiles sont généralement équipés de moyens permettant la fixation d'un anneau de remorquage, utilisable en cas de panne ou d'accident. De tels anneaux sont fixés sur un élément de structure du véhicule et peuvent être placés aussi bien à l'avant qu'à l'arrière du véhicule.

Il existe différents types de moyens de fixation d'un anneau de remorquage. Certains moyens de fixation comprennent une douille recevant l'anneau de remorquage et soudée à un longeron du véhicule. Cette solution est performante en termes de structure et résistance mais nécessite un anneau de remorquage long, lourd et coûteux. D'autres moyens de fixation comprennent une douille fixée directement ou via un support sur un absorbeur de choc longitudinal situé entre un longeron et une traverse du véhicule. Ce positionnement plus proche de l'extrémité du véhicule permet d'utiliser un anneau de remorquage moins long et moins lourd. Un tel absorbeur de choc se comprime longitudinalement lors d'un choc afin d'absorber une partie de l'énergie reçue. Toutefois, la fixation de la douille étant alors réalisée sur des parois latérales de l'absorbeur de choc, cette fixation tend à créer une zone incompressible, ce qui peut engendrer une dégradation du comportement de l'absorbeur en cas de choc frontal ou arrière. C'est le cas par exemple du support décrit dans le document DE 10 2007 029 860 A1, lequel comprend des pattes de fixation soudées à l'intérieur de l'absorbeur de choc, ces pattes de fixation étant appliquées contre les parois internes de l'absorbeur et soudées à celles-ci. Les moyens de fixation décrits dans ce document présentent en outre l'inconvénient d'être complexes et difficiles à mettre en oeuvre, notamment sur des absorbeurs de choc de faibles dimensions. Par ailleurs, les pattes sont susceptibles d'être arrachées lors d'un remorquage. Une structure différente est montrée dans le document DE 10 2007 024 882 A1 qui divulgué le préambule de la revendication 1. Il existe donc un besoin pour réaliser un support pour anneau de remorquage qui puisse être fixé de manière sûre et simple à un élément de structure longitudinal d'un véhicule par exemple un élément absorbeur, sans dégrader la fonctionnalité de ce dernier, notamment en cas de choc frontal ou arrière.

A cet effet, l'objet de l'invention concerne une structure de véhicule automobile, notamment une structure de soubassement, ladite structure comprenant deux éléments de structure longitudinaux reliés par une traverse, chaque élément de structure longitudinal comprenant des parois longitudinales définissant une cavité de section fermée. Ladite structure est caractérisée en ce qu'elle comprend un support métallique pour anneau de remorquage, ledit support comprenant :
- une douille présentant un axe longitudinal et destinée à recevoir un anneau de remorquage de véhicule automobile suivant cet axe longitudinal,
- une plaque plane, solidarisée à la douille perpendiculairement à l'axe longitudinal de celle-ci, deux bords opposés de ladite plaque plane présentant chacun une patte de fixation faisant saillie et s'étendant dans le prolongement de ladite plaque plane,
et en ce que ledit support est disposé à l'intérieur de l'un desdits éléments de structure longitudinal et fixé à ce dernier par ses pattes de fixation, sa plaque plane étant sensiblement perpendiculaire ou perpendiculaire à la direction longitudinale dudit élément de structure longitudinal, chaque patte de fixation dudit support traversant un orifice correspondant d'une paroi longitudinale respective dudit élément de structure longitudinal et faisant saillie à l'extérieur dudit élément de structure longitudinal, l'extrémité de la douille opposée à ladite plaque plane étant insérée dans un orifice de forme complémentaire de la traverse.

La plaque plane et les pattes de fixation du support s'étendent ainsi dans un seul et même plan.

Un tel support peut être facilement disposé à l'intérieur d'un élément de structure creux, ses pattes de fixation traversant les parois de cet élément de structure. Il est dès lors aisé de fixé le support sur l'élément de structure en fixant la partie des pattes de fixation située à l'extérieur de l'élément de structure à ce dernier, par exemple par soudure des pattes de fixation sur la face externe de parois de l'élément de structure.

La zone de fixation du support sur l'élément de structure est ainsi très restreinte suivant la direction longitudinale de ce dernier, étant limitée à l'épaisseur des pattes de fixation. Ceci permet de limiter l'impact de la fixation du support sur la forme et les fonctionnalités de l'élément de structure. Notamment, il n'est pas nécessaire que les parois de l'élément de structure soient planes sur une grande longueur pour permettre une fixation des pattes de fixation, mais uniquement sur une longueur correspondant sensiblement à l'épaisseur des pattes de fixation.

Par ailleurs, les deux pattes de fixation opposées permettent de limiter une rotation du support suivant au moins un axe contenu dans le plan de la plaque plane. De préférence, les bords opposés du support portant les pattes de fixations sont parallèles ou sensiblement parallèles.

Avantageusement et de manière non limitative, le support selon l'invention peut comprendre une troisième patte de fixation s'étendant dans le prolongement de la plaque plane depuis un troisième bord de celle-ci. Une troisième patte permet notamment de limiter davantage les rotations du support autour d'un ou plusieurs axes contenus dans le plan de la plaque plane.

Ce troisième bord est par exemple un bord sensiblement perpendiculaire ou perpendiculaire auxdits bords opposés. Les trois pattes de fixation permettent alors de bloquer une rotation de la plaque plane autour de deux axes perpendiculaires contenus dans le plan de la plaque plane.

Avantageusement et de manière non limitative, chaque patte de fixation peut former un bord de ladite plaque plane. Autrement dit, chaque patte de fixation peut s'étendre sur toute la longueur dudit bord. Ceci permet de simplifier la réalisation de la plaque plane.

Avantageusement et de manière non limitative, un bord de ladite plaque plane dépourvu de patte de fixation peut être replié. Ceci permet de rigidifier la plaque plane. Ce pli peut notamment former un arrondi, sa section étant courbe.

Par exemple, ce bord peut être replié du côté du support opposé à la douille.

De manière générale, ce bord peut être replié d'un angle de 5 à 90°, par exemple par emboutissage ou toute autre technique appropriée.

Avantageusement et de manière non limitative, une extrémité de la douille peut être insérée dans un orifice de forme complémentaire de ladite plaque plane. Ceci permet de renforcer la liaison entre la douille et la plaque plane.

Avantageusement et de manière non limitative, la douille peut être solidarisée à ladite plaque plane par soudure, notamment par un cordon de soudure.

De manière générale, la plaque plane est de préférence réalisée d'une pièce, par exemple par emboutissage ou toute autre technique appropriée.

La douille peut présenter un taraudage pour recevoir une partie filetée d'un anneau de remorquage. L'invention n'est toutefois pas limitée à ce mode de réalisation et d'autres types d'assemblage entre la douille et l'anneau de remorquage peuvent être envisagés.

Le support selon l'invention est métallique et peut être en acier, acier inoxydable, aluminium, en alliage à base d'aluminium et autres.

Avantageusement, la plaque plane et les pattes de fixation du support métallique sont conformées de manière à ce que les pattes de fixation saillent d'orifices prévus à cet effet d'un élément de structure longitudinal à l'intérieur duquel est placé le support métallique. En particulier, les pattes de fixation peuvent être conformées pour saillir suffisamment de ces orifices pour permettre une fixation des pattes de fixation à l'extérieur de cet élément de structure longitudinal. Un tel élément de structure longitudinal fait partie d'une structure de véhicule telle que décrite ci-après.

La plaque plane est ainsi disposée à l'intérieur de l'élément de structure longitudinal, à distance des extrémités de ce dernier. Autrement dit, la plaque plane ne ferme pas une extrémité de l'élément de structure longitudinal. La distance à laquelle est disposée la plaque plane dépend de la longueur de la douille dont une extrémité est solidaire de cette plaque plane et l'autre extrémité est solidaire de la traverse.

La structure particulière du support selon l'invention permet de le positionner à l'intérieur de l'élément de structure longitudinal, même lorsque ce dernier est de petite dimension, tout en facilitant sa fixation.

Une telle fixation est d'autant plus simple que le support selon l'invention peut être fixé à l'élément de structure longitudinal, à l'extérieur de celui-ci.

A titre d'exemple, les parois longitudinales de l'élément de structure peuvent définir une cavité dont la section présente une forme générale de polygone, par exemple de quadrilatère. On peut toutefois envisager que les parois longitudinales de l'élément de structure définissent une cavité dont la section présente une forme générale de cercle, ovale, ellipse ou similaire.

Avantageusement et de manière non limitative, chaque patte de fixation peut ainsi être soudée sur la paroi latérale de l'élément de structure longitudinal qu'elle traverse, à l'extérieur dudit élément de structure longitudinal, par exemple par un cordon de soudure lequel peut s'étendre sur toute la périphérie de la patte de fixation. On comprend ainsi qu'il est particulièrement simple de procéder à la fixation du support à l'élément de structure longitudinal.

Avantageusement et de manière non limitative, la douille peut être soudée sur la traverse, par exemple par un cordon de soudure, notamment sur toute sa périphérie.

Avantageusement et de manière non limitative, l'élément de structure longitudinal est un élément absorbeur compressible longitudinalement, par exemple disposé entre un longeron du véhicule et la traverse.

L'invention concerne encore un véhicule automobile comprenant un support métallique pour anneau de remorquage selon l'invention ou une structure de véhicule automobile selon l'invention.

L'invention est maintenant décrite en référence aux dessins annexés, non limitatifs, dans lesquels :
- la figure 1 est une vue en perspective schématique d'une structure de véhicule automobile équipée d'un anneau de remorquage maintenu au moyen d'un support selon l'invention,
- la figure 2 est une vue en perspective partielle d'un élément de structure longitudinal équipé d'un support pour anneau de remorquage selon l'invention,
- la figure 3 est une vue de face du support et de l'élément de structure longitudinal de la figure 2.

Dans la présente description, les termes avant, arrière, supérieur, inférieur, font référence aux directions avant et arrière du véhicule, lorsque le support est monté sur le véhicule. Les axes X, Y, Z, correspondent respectivement à l'axe longitudinal (d'avant en arrière), transversal et vertical du véhicule.

Par sensiblement parallèle ou perpendiculaire, on entend une direction/un plan formant un angle d'au plus ±10° avec une direction/un plan parallèle ou perpendiculaire, notamment un angle d'au plus ±5°.

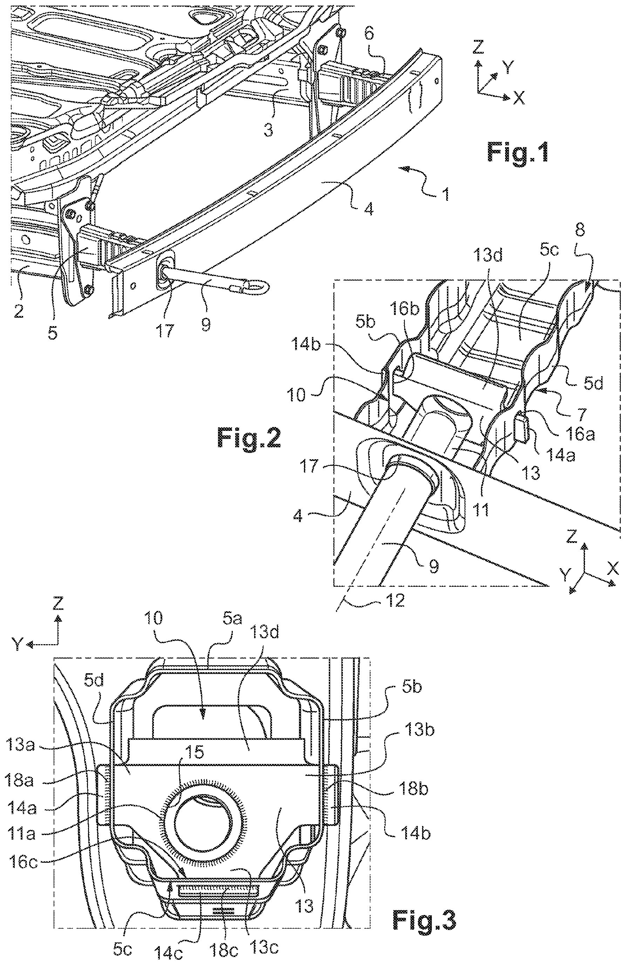

La figure 1 représente une structure de véhicule automobile 1, notamment une structure de soubassement, laquelle comprend deux longerons longitudinaux 2, 3 et une traverse 4. Dans l'exemple, la traverse 4 est une traverse extrême arrière.

La structure 1 comprend également deux éléments de structure longitudinaux 5, 6, lesquels sont des éléments absorbeurs de choc dans l'exemple représenté. Les éléments absorbeurs 5, 6 étant identiques, seul l'un d'eux est décrit en référence aux figures 2 et 3. Cet élément absorbeur 5 comprend quatre parois longitudinales 5a-5d : deux parois latérales 5b, 5d, une paroi supérieure 5a et une paroi inférieure 5c. Ces parois longitudinales 5a-5d définissent une cavité dont la section fermée est sensiblement en forme de quadrilatère, dans l'exemple sensiblement carrée. L'élément absorbeur 5 forme ainsi un profilé creux allongé. Les parois longitudinales 5a-5d de l'exemple présentent en outre des ondulations transversales conférant à l'élément absorbeur 5 une compressibilité longitudinale, notamment en cas de choc suivant la direction longitudinale du véhicule. L'élément absorbeur 5 représenté est enfin formé de deux enveloppes : une enveloppe inférieure 7 et une enveloppe supérieure 8 dont le plan d'assemblage est horizontal (plan XY). Ainsi, l'enveloppe inférieure 7 comprend la paroi longitudinale inférieure 5c et une partie des parois longitudinales latérales 5b, 5d, l'enveloppe supérieure 8 comprenant la paroi longitudinale supérieure 5a et l'autre partie des parois longitudinales latérales 5b, 5d. Pour davantage de clarté, la paroi longitudinale supérieure 5a a été omise sur la figure 2.

Un anneau de remorquage 9 est fixé à la structure 1 au moyen d'un support métallique 10.

Selon l'invention, ce support métallique 10 comprend :
- une douille 11 présentant un axe longitudinal 12 et destinée à recevoir l'anneau de remorquage 9 suivant cet axe longitudinal,
- une plaque plane 13, solidarisée à la douille 11 perpendiculairement à l'axe longitudinal 12 de celle-ci.

De plus, deux bords opposés 13a, 13b de la plaque plane 13 comportent chacun une patte de fixation 14a, 14b respectivement, faisant saillie et s'étendant dans le prolongement de la plaque plane 13. Enfin, une troisième patte de fixation 14c s'étend dans le prolongement de la plaque plane 13 depuis un troisième bord 13c de celle-ci, ce troisième bord 13c étant sensiblement perpendiculaire aux deux premiers bords opposés 13a, 13b.

La plaque plane 13 représentée dans l'exemple comprend quatre bords 13a, 13b, 13c, 13d, les trois premiers formant des pattes de fixation 14a, 14b, 14c.

Le quatrième bord 13d est enfin replié en arrondi dans une direction opposée à la douille 11, ce qui permet de rigidifier la plaque plane 13.

La douille 11 est fixée à la plaque plane 13 par soudure, par exemple par un cordon de soudure 11a entourant la douille 11, du côté de la plaque plane 13 opposé à la douille, tel que visible sur la figure 3. En outre, la plaque plane 13 présente un orifice 15 de forme complémentaire de la douille 11 dans lequel est insérée une extrémité de la douille 11.

L'assemblage du support 10 à la structure 1 de véhicule est maintenant décrit.

Le support 10 est inséré à l'intérieur de l'élément absorbeur 5, sa plaque plane 13 étant disposée perpendiculairement à l'axe longitudinal de l'élément absorbeur 5, autrement dit perpendiculairement à l'axe longitudinal X du véhicule sur les figures. En outre, chaque patte de fixation 14a, 14b, 14c traverse un orifice correspondant 16a, 16b, 16c, respectivement d'une paroi latérale de l'élément absorbeur, tel que visible sur les figures 2 et 3. Seuls deux de ces orifices 16a, 16b sont visibles sur la figure 2, le troisième orifice 16c étant sur la paroi latérale 5c de l'élément absorbeur 5 à l'emplacement indiqué sur la figure 3. La douille 11 traverse quant à elle un orifice de forme complémentaire 17 de la traverse 4.

Les pattes de fixation 14a-14c sont soudées par des cordons de soudure 18a, 18b, 18c respectivement sur les parois latérales correspondantes de l'élément absorbeur 5, à l'extérieur de celui-ci, du côté du support opposé à la douille 11 (figure 3). La douille 11 est également fixée à la traverse 4 par un cordon de soudure (non représenté).

Le support métallique 10 étant fixé, l'anneau de remorquage 9 peut être inséré dans la douille 11.

Le support métallique 10 selon l'invention présente l'avantage de permettre d'améliorer l'encastrement de la douille 11 pour un bon rapport qualité prix et un poids modéré. Le support métallique comporte des pattes de fixation 13a, 13b permettant de limiter la rotation Z de la douille, la patte de fixation 13c permettant de limiter la rotation Y de la douille (l'anneau étant fortement sollicité en Y et Z notamment). En outre, les cordons de soudure 18a-18c travaillant en cisaillement, la résistance de la fixation du support métallique 10 est améliorée, notamment en cours de remorquage.

La traverse 4 décrite ci-dessus est une traverse extrême arrière. Le support 10 décrit pourrait bien entendu être fixé de manière similaire à une traverse avant de structure de véhicule. En outre, le support décrit pourrait être disposé à l'intérieur de tout élément de structure longitudinal creux du véhicule, de section circulaire ou elliptique ou de section polygonale, comprenant au moins deux parois longitudinales, de préférence au moins trois parois longitudinales, notamment quatre parois longitudinales.

## Revendications

1. Structure de véhicule automobile (1), notamment une structure de soubassement, ladite structure comprenant deux éléments de structure longitudinaux (5, 6) reliés par une traverse (4), chaque élément de structure longitudinal (5, 6) comprenant quatre parois longitudinales (5a-5d) définissant une cavité de section fermée, la structure (1) comprenant un support métallique (10) pour anneau de remorquage, lequel support métallique comprenant :
- une douille (11) présentant un axe longitudinal (12) et destinée à recevoir un anneau de remorquage (9) de véhicule automobile suivant cet axe longitudinal (12),
- une plaque plane (13), solidarisée à la douille (11) perpendiculairement à l'axe longitudinal (12) de celle-ci, deux bords opposés (13a, 13b) de ladite plaque plane (13) présentant chacun une patte de fixation (14a, 14b) faisant saillie et s'étendant dans le prolongement de ladite plaque plane (13),
ledit support (10) étant disposé à l'intérieur de l'un (5) desdits éléments de structure longitudinal et fixé à ce dernier par ses pattes de fixation (14a, 14b, 14c), sa plaque plane (13) étant sensiblement perpendiculaire ou perpendiculaire à la direction longitudinale dudit élément de structure longitudinal (5), **caractérisée en ce que** chaque patte de fixation (14a, 14b, 14c) dudit support (10) traverse un orifice (16a, 16b, 16c) correspondant d'une paroi longitudinale respective (5d, 5b, 5c) dudit élément de structure longitudinal (5) et fait saillie à l'extérieur dudit élément de structure longitudinal (5), l'extrémité de la douille (11) opposée à ladite plaque plane (13) étant insérée dans un orifice (17) de forme complémentaire de la traverse (4).

2. Structure de véhicule automobile (1) selon la revendication 1, **caractérisé en ce que** le support (10) comprend une troisième patte de fixation (14c) s'étendant dans le prolongement de la plaque plane (13) depuis un troisième bord (13c) de celle-ci, notamment un troisième bord (13c) sensiblement perpendiculaire auxdits bords opposés (13a, 13b).

3. Structure de véhicule automobile (1) selon l'une quelconque des revendications 1 ou 2, **caractérisé en ce que** chaque patte de fixation (14a, 14b, 14c) forme un bord (13a, 13b, 13c) de ladite plaque plane (13).

4. Structure de véhicule automobile (1) selon l'une quelconque des revendications 1 à 3, **caractérisé en ce qu'**un bord (13d) de ladite plaque plane (13) dépourvu de patte de fixation est replié, par exemple du côté du support opposé à la douille.

5. Structure de véhicule automobile (1) selon l'une quelconque des revendications 1 à 4, **caractérisé en ce qu'**une extrémité de la douille (11) est insérée dans un orifice (15) de forme complémentaire de ladite plaque plane (13).

6. Structure de véhicule automobile (1) selon la revendication 5, **caractérisée en ce que** chaque patte de fixation (14a, 14b, 14c) est soudée sur la paroi latérale de l'élément de structure longitudinal (5) qu'elle traverse, à l'extérieur dudit élément de structure longitudinal (5), par exemple par un cordon de soudure.

7. Structure de véhicule automobile (1) selon l'une des revendications 5 ou 6, **caractérisée en ce que** la douille (11) est soudée sur la traverse (4), par exemple par un cordon de soudure.

8. Structure de véhicule automobile (1) selon l'une des revendications 5 à 7, **caractérisée en ce que** l'élément de structure longitudinal (5) est un élément absorbeur compressible longitudinalement.

9. Véhicule automobile comprenant une structure de véhicule automobile selon l'une des quelconque des revendications 1 à 8.

## Patentansprüche

1. Kraftfahrzeugstruktur (1), insbesondere eine Unterbodenstruktur, wobei die Struktur zwei Längsstrukturelemente (5, 6) enthält, die durch einen Querträger (4) verbunden sind, wobei jedes Längsstrukturelement (5, 6) vier Längswände (5a-5d) enthält, die einen Hohlraum mit geschlossenem Querschnitt definieren, wobei die Struktur (1) einen metallischen Träger (10) für eine Zugöse enthält, wobei der metallische Träger enthält:
- eine Buchse (11), die eine Längsachse (12) aufweist und dazu bestimmt ist, eine Zugöse (9) eines Kraftfahrzeugs gemäß dieser Längsachse (12) aufzunehmen,
- eine ebene Platte (13), die mit der Buchse (11) lotrecht zu deren Längsachse (12) fest verbunden ist, wobei zwei entgegengesetzte Ränder (13a, 13b) der ebenen Platte (13) je eine Befestigungslasche (14a, 14b) aufweisen, die vorsteht und sich in der Verlängerung der ebenen Platte (13) erstreckt,
wobei der Träger (10) im Inneren eines (5) der Längsstrukturelemente angeordnet und an diesem durch seine Befestigungslaschen (14a, 14b, 14c) befestigt ist, wobei seine ebene Platte (13) im Wesentlichen lotrecht oder lotrecht zur Längsrichtung des Längsstrukturelements (5) ist, **dadurch gekennzeichnet, dass** jede Befestigungslasche (14a, 14b, 14c) des Trägers (10) eine entsprechende Öffnung (16a, 16b, 16c) einer jeweiligen Längswand (5d, 5b, 5c) des Längsstrukturelements (5) durchquert und nach außerhalb des Längsstrukturelements (5) vorsteht, wobei das Ende der Buchse (11) entgegengesetzt zur ebenen Platte (13) in eine Öffnung (17) komplementärer Form des Querträgers (4) eingefügt ist.

2. Kraftfahrzeugstruktur (1) nach Anspruch 1, **dadurch gekennzeichnet, dass** der Träger (10) eine dritte Befestigungslasche (14c) enthält, die sich in der Verlängerung der ebenen Platte (13) von einem dritten Rand (13c) von dieser erstreckt, insbesondere einem dritten Rand (13c) im Wesentlichen lotrecht zu den entgegengesetzten Rändern (13a, 13b).

3. Kraftfahrzeugstruktur (1) nach einem der Ansprüche 1 oder 2, **dadurch gekennzeichnet, dass** jede Befestigungslasche (14a, 14b, 14c) einen Rand (13a, 13b, 13c) der ebenen Platte (13) formt.

4. Kraftfahrzeugstruktur (1) nach einem der Ansprüche 1 bis 3, **dadurch gekennzeichnet, dass** ein keine Befestigungslasche aufweisender Rand (13d) der ebenen Platte (13) umgebogen ist, zum Beispiel auf der Seite des Trägers entgegengesetzt zur Buchse.

5. Kraftfahrzeugstruktur (1) nach einem der Ansprüche 1 bis 4, **dadurch gekennzeichnet, dass** ein Ende der Buchse (11) in eine Öffnung (15) komplementärer Form der ebenen Platte (13) eingefügt ist.

6. Kraftfahrzeugstruktur (1) nach Anspruch 5, **dadurch gekennzeichnet, dass** jede Befestigungslasche (14a, 14b, 14c) an die Seitenwand des Längsstrukturelements (5) geschweißt ist, die sie durchquert, auf der Außenseite des Längsstrukturelements (5), zum Beispiel durch eine Schweißnaht.

7. Kraftfahrzeugstruktur (1) nach einem der Ansprüche 5 oder 6, **dadurch gekennzeichnet, dass** die Buchse (11) auf den Querträger (4) geschweißt ist, zum Beispiel durch eine Schweißnaht.

8. Kraftfahrzeugstruktur (1) nach einem der Ansprüche 5 bis 7, **dadurch gekennzeichnet, dass** das Längsstrukturelement (5) ein in Längsrichtung komprimierbares Absorptionselement ist.

9. Kraftfahrzeug, das eine Kraftfahrzeugstruktur nach einem der Ansprüche 1 bis 8 enthält.

## Claims

1. Motor vehicle structure (1), in particular an underframe structure, said structure comprising two longitudinal structural elements (5, 6) connected by a crossmember (4), each longitudinal structural element (5, 6) comprising four longitudinal walls (5a-5d) defining a cavity of closed cross section, the structure (1) comprising a metal mounting (10) for a towing eye, said metal mounting comprising:
- a sleeve (11) having a longitudinal axis (12) and intended to receive a motor vehicle towing eye (9) along this longitudinal axis (12),
- a planar plate (13) secured to the sleeve (11) perpendicularly to the longitudinal axis (12) thereof, two opposed edges (13a, 13b) of said planar plate (13) each having a fixing tab (14a, 14b) which projects and extends in the continuation of said planar plate (13), said mounting (10) being arranged inside one (5) of said longitudinal structural elements and fixed thereto by its fixing tabs (14a, 14b, 14c), its planar plate (13) being substantially perpendicular or perpendicular to the longitudinal direction of said longitudinal structural element (5),
**characterized in that** each fixing tab (14a, 14b, 14c) of said support (10) passes through a corresponding orifice (16a, 16b, 16c) in a respective longitudinal wall (5d, 5b, 5c) of said longitudinal structural element (5) and projects outside said longitudinal structural element (5), the end of the sleeve (11) opposed to said planar plate (13) being inserted into an orifice (17) of complementary shape in the crossmember (4).

2. Motor vehicle structure (1) according to Claim 1, **characterized in that** the mounting (10) comprises a third fixing tab (14c) extending in the continuation of the planar plate (13) from a third edge (13c) thereof, in particular a third edge (13c) substantially perpendicular to said opposed edges (13a, 13b).

3. Motor vehicle structure (1) according to either one of Claims 1 and 2, **characterized in that** each fixing tab (14a, 14b, 14c) forms an edge (13a, 13b, 13c) of said planar plate (13).

4. Motor vehicle structure (1) according to any one of Claims 1 to 3, **characterized in that** an edge (13d) of said planar plate (13) devoid of a fixing tab is folded over, for example on the side of the mounting opposed to the sleeve.

5. Motor vehicle structure (1) according to any one of Claims 1 to 4, **characterized in that** one end of the sleeve (11) is inserted into an orifice (15) of complementary shape in said planar plate (13).

6. Motor vehicle structure (1) according to Claim 5, **characterized in that** each fixing tap (14a, 14b, 14c) is welded to the lateral wall of the longitudinal structural element (5) which it passes through, outside said longitudinal structural element (5), for example by a welding bead.

7. Motor vehicle structure (1) according to either of Claims 5 and 6, **characterized in that** the sleeve (11) is welded to the crossmember (4), for example by a welding bead.

8. Motor vehicle structure (1) according to one of Claims 5 to 7, **characterized in that** the longitudinal structural element (5) is a longitudinally compressible absorber element.

9. Motor vehicle comprising a motor vehicle structure according to any one of Claims 1 to 8.
